# EUROPEAN PATENT SPECIFICATION

(11) **EP 3 066 881 B1**
(45) Date of publication and mention of the grant of the patent: **24.05.2017**
(21) Application number: 14802252.8
(22) Date of filing: 30.10.2014
(51) Int. Cl.: H04W 72/04, G06Q 30/02, H04L 29/06, H04L 12/911

(54) **COMMUNITY WI-FI NETWORK**
GEMEINSCHAFTLICHES WIFI-NETZWERK
RÉSEAU WI-FI COMMUNAUTAIRE

(30) Priority: 04.11.2013 US 201314071619
(43) Date of publication of application: 14.09.2016
(73) Proprietor: Microsoft Technology Licensing, LLC, Redmond, WA 98052 (US)
(72) Inventor: MACDONALD, David Neil, Redmond, Washington 98052-6399 (US); SINGH, Vikas, Redmond, Washington 98052-6399 (US); SHARMA, Saumaya, Redmond, Washington 98052-6399 (US); MAZANDARANY, Darya, Redmond, Washington 98052-6399 (US); LAMBA, Triptpal Singh, Redmond, Washington 98052-6399 (US); GOYAL, Piyush, Redmond, Washington 98052-6399 (US); FORD, Brent Edward, Redmond, Washington 98052-6399 (US)
(74) Representative: Rees, Alexander Ellison
(86) International application number: PCT/US2014/063019
(87) International publication number: WO 2015/066250

(56) References cited:
- US-A1- 2006 153 122
- US-A1- 2007 082 654
- XIN AI ET AL: "Wi-Sh: A Simple, Robust Credit Based Wi-Fi Community Network", INFOCOM 2009. THE 28TH CONFERENCE ON COMPUTER COMMUNICATIONS. IEEE, IEEE, PISCATAWAY, NJ, USA, 19 April 2009 (2009-04-19), pages 1638-1646, XP031468921, ISBN: 978-1-4244-3512-8

## Description

### BACKGROUND

Local computing networks are ubiquitous in current society. Local networks are oftentimes prevalent in homes, businesses, schools, public areas, and so forth. When connected to the local network, a computing device can use and/or access various network resources made available on the local network, such as the Internet, network attached storage, printers, other computing devices on the local network, and the like.

Access to the Internet is typically provided to a local network by an Internet service provider (ISP). An account that allocates a network bandwidth capacity can be procured from the ISP for the local network. Accordingly, when the computing device is connected to the local network, the network bandwidth capacity allocated to the account (e.g., for the local network) can be usable by the computing device (as well as other computing device(s) connected to the local network).

Local networks oftentimes have excess network bandwidth capacities allocated to respective accounts procured from ISP(s). Accordingly, it may be desirable to share portions of the network bandwidth capacities available to the local networks (e.g., with devices other than computing devices respectively included in the local networks). Yet, traditional approaches for sharing a portion of a network bandwidth capacity available to a local network with a differing device commonly involve connecting the differing device to the local network via a wired connection or providing credentials to enable the differing device to wirelessly connect to the local network (e.g., over a wireless fidelity (Wi-Fi) connection). However, in various scenarios, the foregoing approaches may be impractical and time-consuming. Moreover, the above approaches may pose security risks, particularly when allowing a device of an unknown guest to connect to the local network.

US 2007/082654 A1 discloses a system, method and apparatus for more easily managing secure access to local area net works, so that a member of a community of trusted users is able to have secure, accountable access to the Internet from either their own, home, wireless access point or while roaming via other community-affiliated wireless access points. A communications module running on the wireless device manages the access using an access key that may be determined by a combination of the network name and a community identifier. The communications manager may hide this ability to access the Internet from the user while performing further security checks. Based on whether the user is at home or roaming, the user may be given different access permission such as different levels of quality of service, including different levels of bandwidth throttling.

### SUMMARY

Described herein are various technologies that pertain to joining a computing device in a local network to a community Wi-Fi network. The community Wi-Fi network can include disparate computing devices, where the disparate computing devices share respective network bandwidth capacities with one or more member consumer devices of the community Wi-Fi network. The computing device can receive an opt-in signal indicating that the computing device desirably be added to the community Wi-Fi network. Responsive to receiving the opt-in signal, the computing device can retrieve parameters of an account. The parameters of the account can include data indicating a network bandwidth capacity allocated to the account, where the network bandwidth capacity allocated to the account is usable by the computing device. Moreover, a shared portion of the network bandwidth capacity allocated to the account can be determined based at least in part upon the parameters of the account. Further, the computing device can be configured to share the shared portion of the network bandwidth capacity for consumption by one or more member consumer devices. The computing device can communicate with the one or more member consumer devices over a Wi-Fi connection.

In accordance with various embodiments set forth herein, bandwidth provided and consumed by a user in the community Wi-Fi network can be net metered. More particularly, usage data indicative of an amount of consumed network bandwidth capacity provided by a computing device of the user (e.g., consumed by one or more member consumer devices of other users) in the community Wi-Fi network can be received. Moreover, usage data indicative of an amount of consumed network bandwidth capacity consumed by a member consumer device of the user (e.g., provided by computing devices of the other users) in the community Wi-Fi network can be received. The usage data, for instance, can be received by at least one server computing device, the computing device, a differing computing device in the community Wi-Fi network, the member consumer device, a differing member consumer device in the community Wi-Fi network, a combination thereof, and so forth. Credits can be assigned to a profile of the user based upon the amount of the consumed network bandwidth capacity provided by the computing device of the user in the community Wi-Fi network. Debits can also be assigned to the profile of the user based upon the amount of the consumed network bandwidth capacity consumed by the member consumer device of the user in the community Wi-Fi network. Further, a net metered value for the profile of the user can be computed as a function of a difference between the credits and the debits.

The above summary presents a simplified summary in order to provide a basic understanding of some aspects of the systems and/or methods discussed herein. This summary is not an extensive overview of the systems and/or methods discussed herein. It is not intended to identify key/critical elements or to delineate the scope of such systems and/or methods. Its sole purpose is to present some concepts in a simplified form as a prelude to the more detailed description that is presented later.

### BRIEF DESCRIPTION OF THE DRAWINGS

Fig. 1 illustrates a functional block diagram of an exemplary system that joins a computing device in a local network to a community Wi-Fi network.
Fig. 2 illustrates a functional block diagram of an exemplary system that automatically configures the computing device for joining the community Wi-Fi network upon receipt of an opt-in signal indicating that the computing device desirably be added to the community Wi-Fi network.
Fig. 3 illustrates a functional block diagram of an exemplary system that joins a computing device and a consumer device of a particular user to one or more community Wi-Fi networks.
Fig. 4 illustrates a functional block diagram of an exemplary system that joins a consumer device to the community Wi-Fi network.
Fig. 5 illustrates a functional block diagram of an exemplary system that evaluates a resource provision and consumption model for a community Wi-Fi network.
Fig. 6 illustrates a functional block diagram of an exemplary system that controls admission to the community Wi-Fi network from a server computing device.
Fig. 7 illustrates a functional block diagram of another exemplary system that controls admission to the community Wi-Fi network.
Fig. 8 is a flow diagram that illustrates an exemplary methodology of joining a computing device in a local network to a community Wi-Fi network.
Fig. 9 is a flow diagram that illustrates an exemplary methodology of net metering bandwidth provided and consumed by a user in a community Wi-Fi network.
Fig. 10 illustrates an exemplary computing device.

### DETAILED DESCRIPTION

Various technologies pertaining to joining a computing device in a local network to a community Wi-Fi network are now described with reference to the drawings, wherein like reference numerals are used to refer to like elements throughout. In the following description, for purposes of explanation, numerous specific details are set forth in order to provide a thorough understanding of one or more aspects. It may be evident, however, that such aspect(s) may be practiced without these specific details. In other instances, well-known structures and devices are shown in block diagram form in order to facilitate describing one or more aspects. Further, it is to be understood that functionality that is described as being carried out by certain system components may be performed by multiple components. Similarly, for instance, a component may be configured to perform functionality that is described as being carried out by multiple components.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

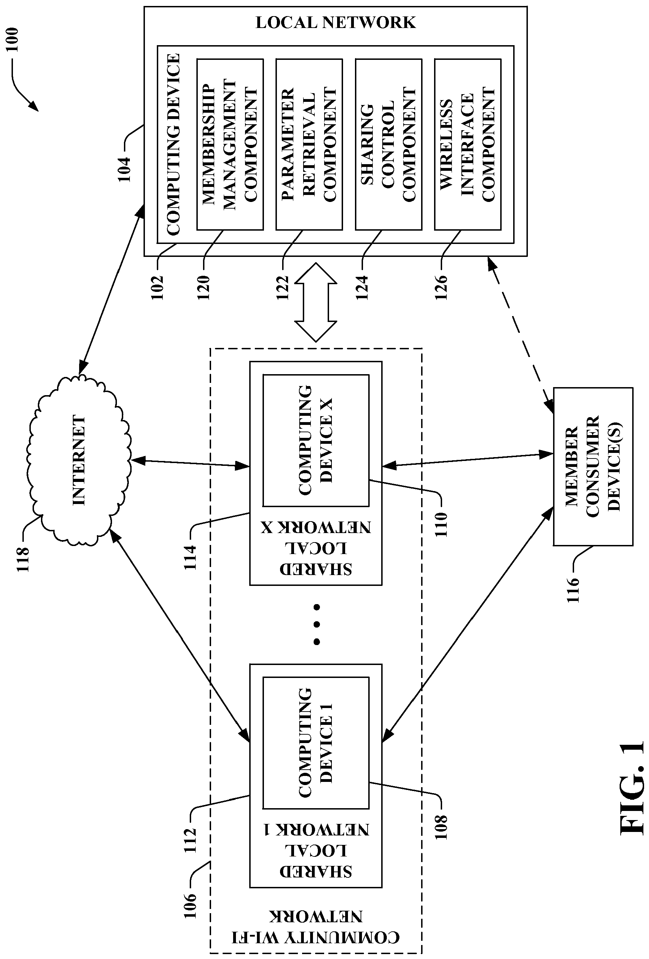

Referring now to the drawings, Fig. 1 illustrates a system 100 that joins a computing device 102 in a local network 104 to a community Wi-Fi network 106. The community Wi-Fi network 106 is a mesh of computing devices that have been joined to such network (e.g., via the computing devices being opted-in to the community Wi-Fi network 106). Thus, the community Wi-Fi network 106 can include disparate computing devices (other than the computing device 102) that have been joined to the community Wi-Fi network 106.

More particularly, the community Wi-Fi network 106 can include a computing device 1 108, ..., and a computing device X 110 (collectively referred to herein as computing devices 108-110), where X can be substantially any integer greater than one. The computing device 1 108 can be included in a shared local network 1 112, ..., and the computing device X 110 can be included in a shared local network X 114 (collectively referred to herein as shared local networks 112-114). While many of the examples set forth herein describe each local network (e.g., the local network 104, the shared local networks 112-114) including one computing device joined (or joinable) to the community Wi-Fi network 106, it is to be appreciated that one or more of the local networks can include more than one computing device joined (or joinable) to the community Wi-Fi network 106 (e.g., the shared local network 1 112 can include two or more computing devices that have been added to the community Wi-Fi network 106, etc.). Moreover, it is contemplated that one or more of the local networks (e.g., the local network 104, the shared local networks 112-114) can additionally include computing device(s) that are not joined to the community Wi-Fi network 106; thus, for example, the shared local network 1 112 can include the computing device 1 108 (which is joined to the community Wi-Fi network 106) and a differing computing device (which is not joined to the community Wi-Fi network 106).

The shared local networks 112-114 each have a respective account that allocates a network bandwidth capacity (e.g., to the Internet 118) procured from an ISP. The computing devices 108-110 in the community Wi-Fi network 106 can share respective network bandwidth capacities (e.g., for the shared local networks 112-114) with one or more member consumer devices 116 of the community Wi-Fi network 106. Further, users of the computing devices 108-110 can be reimbursed for the respective network bandwidth capacities consumed by the member consumer devices 116. Moreover, a member consumer device can be a mobile device that can consume network bandwidth capacity shared by the computing devices 108-110 in the community Wi-Fi network 106. A mobile device, for example, can be a mobile phone (e.g., smartphone), a tablet computer, a handheld computer, a laptop computer, a wearable computer, a personal digital assistant (PDA), a portable gaming device, an in-vehicle communications and infotainment system, or the like. However, it is also contemplated that a member consumer device need not be a mobile device, and instead, can be substantially any other type of computing device that can consume network bandwidth capacity shared by the computing devices 108-110 in the community Wi-Fi network 106.

Similarly, the local network 104 can have an account that allocates a network bandwidth capacity (e.g., to the Internet 118) procured from an ISP. Accordingly, the network bandwidth capacity allocated to the account of the local network 104 can be usable by the computing device 102 to access the Internet 118. Further, as described in greater detail herein, the computing device 102 can be joined to the community Wi-Fi network 106 responsive to a received opt-in signal to enable at least a portion of the network bandwidth capacity allocated to the account usable by the computing device 102 to be shared with the member consumer devices 116.

The computing device 102 can include a membership management component 120 that can receive an opt-in signal indicating that the computing device 102 desirably be added to the community Wi-Fi network 106. Pursuant to an example, the opt-in signal can be received by the membership management component 120 responsive to a user selection. Following this example, the user of the computing device 102 can elect to share excess network bandwidth capacity allocated to the account for the local network 104 procured from the ISP, where the excess network bandwidth capacity can be shared with the member consumer devices 116 in the community Wi-Fi network 106. According to another example, the opt-in signal can be received by the membership management component 120 during initial setup of the computing device 102 (e.g., as part of an out-of-the-box experience of the computing device 102).

The computing device 102 can also include a parameter retrieval component 122 that can retrieve parameters of the account (e.g., the account that allocates the network bandwidth capacity for the local network 104 procured from the ISP) responsive to receiving the opt-in signal. The parameters can include at least data indicating the network bandwidth capacity allocated to the account. According to various embodiments, the parameter retrieval component 122 can obtain other parameters in addition to the data indicating the network bandwidth capacity allocated to the account. Examples of such other parameters include data indicating historic network bandwidth consumption for the account, data indicating a bandwidth cap for the account, data indicating bandwidth throttling for the account, data indicating a cost of the network bandwidth capacity for the account, a combination thereof, and so forth.

According to an example, the parameter retrieval component 122 can retrieve the parameters of the account from a server computing device of the ISP that provides the network bandwidth capacity for the local network 104. Additionally or alternatively, the parameter retrieval component 122 can receive the parameters of the account from a differing device in the local network 104 (e.g., from a routing device in the local network 104, etc.). Moreover, it is contemplated that one or more of the parameters of the account can be manually provided by the user of the computing device 102 to the parameter retrieval component 122.

The computing device 102 can further include a sharing control component 124 that can determine a shared portion of the network bandwidth capacity allocated to the account based at least in part upon the parameters of the account retrieved by the parameter retrieval component 122. Thus, an amount of the network bandwidth capacity allocated to the account that can be consumed by the member consumer devices 116 upon being shared is capped at the shared portion.

According to an example, the sharing control component 124 can dynamically determine an amount of excess network bandwidth capacity for the local network 104 based upon the parameters of the account, and the sharing control component 124 can determine the shared portion of the network bandwidth capacity based upon the amount of excess network bandwidth capacity (e.g., the excess amount can be the shared portion, a fraction of the excess amount can be the shared portion, etc.). According to another example, the sharing control component 124 can determine the shared portion of the network bandwidth capacity based upon a user input to contribute an amount or percentage of the network bandwidth capacity of the local network 104.

The sharing control component 124 can further configure the computing device 102 to share the shared portion of the network bandwidth capacity for consumption by the member consumer devices 116. Upon being shared by the sharing control component 124, the shared portion of the network bandwidth capacity allocated to the account can be made available for consumption by the member consumer devices 116, while a remainder of the network bandwidth capacity allocated to the account can be inhibited from being made available for consumption by the member consumer devices 116 (e.g., the remainder of the network bandwidth capacity allocated to the account can be usable by computing devices included in the local network 104 including the computing device 102).

The computing device 102 can further include a wireless interface component 126 that can communicate with the member consumer devices 116 over a Wi-Fi connection. The wireless interface component 126 can communicate with the member consumer devices 116 via the Wi-Fi connection when the computing device 102 is added to the community Wi-Fi network 106 (e.g., when the sharing control component 124 configures the computing device 102 to share the shared portion of the network bandwidth capacity).

The sharing control component 124 can dynamically adjust the shared portion of the network bandwidth capacity for consumption by the member consumer devices 116 as a function of time based at least in part upon the parameters of the account. For instance, as more network bandwidth capacity is consumed (e.g., by computing devices in the local network 104, by the member consumer devices 116, etc.), the amount of the shared portion of the network bandwidth capacity can be decreased. According to another example, the shared portion of the network bandwidth capacity can be greater during time periods when user(s) of computing devices (e.g., the computing device 102, differing computing device(s)) in the local network 104 are not using the network bandwidth capacity of the local network 104; thus, the sharing control component 124 can dynamically adjust the shared portion of the network bandwidth capacity as a function of user calendar(s), sensed states of computing devices in the local network 104 (e.g., active, hibernating, off, etc.), data from sensors that detect presence within a geographic location (e.g., detect whether someone is in a house, etc.), or the like.

Moreover, the sharing control component 124 can control access to the shared network bandwidth capacity provided for consumption by the member consumer devices 116. The sharing control component 124 can control access based upon attributes of a desired use of the bandwidth, attributes of users who desire to consume the bandwidth, and so forth.

For example, the sharing control component 124 can control access permissions for the shared portion of the network bandwidth capacity for consumption by the member consumer devices 116. The access permissions can permit a first subset of the member consumer devices 116 to consume the shared portion of the network bandwidth capacity. Further, the access permissions can inhibit a second subset of the member consumer devices 116 from consuming the shared portion of the network bandwidth capacity. It is contemplated that the access permissions set by the sharing control component 124 can be based on a whitelist, a blacklist, a combination thereof, etc. According to another example, the access permissions can be set by the sharing control component 124 as a function of relationships in a social network. Following this example, contacts of the user of the computing device 102 can be permitted to consume the shared portion of the network bandwidth capacity, whereas users that are not contacts of the user of the computing device 102 can be inhibited from consuming the shared portion of the network bandwidth capacity. Yet, it is contemplated that the claimed subject matter is not limited to the foregoing examples.

According to another example, the sharing control component 124 can control content restrictions for the shared portion of the network bandwidth capacity for consumption by the member consumer devices 116. The content restrictions controlled by the sharing control component 124 can permit consumption of a first subset of content types by the member consumer devices 116 using the shared portion of the network bandwidth capacity. Moreover, the content restrictions can inhibit consumption of a second subset of the content types by the member consumer devices 116 using the shared portion of the network bandwidth capacity. For instance, the content restrictions can selectively inhibit utilization of the shared portion of the network bandwidth capacity based upon type of application (e.g., game, streaming video, phone call, web browsing, etc.), source of content, size of content, and so forth.

The sharing control component 124 can further control access rights for the shared portion of the network bandwidth capacity for consumption by the member consumer devices 116. The access rights, as controlled by the sharing control component 124, can permit the member consumer devices 116 to access a first subset of network resources of the local network 104. Moreover, the access rights can inhibit the member consumer devices 116 from accessing a second subset of the network resources of the local network 104. Examples of the network resources of the local network 104 include the Internet, network attached storage, network printers, the computing device 102, other computing devices on the local network 104, and so forth.

When joined to the community Wi-Fi network 106, it is contemplated that the computing device 102 can subsequently be removed from the community Wi-Fi network 106. Accordingly, the membership management component 120 can receive, at the computing device 102, an opt-out signal indicating that the computing device 102 desirably be removed from the community Wi-Fi network 106. Responsive to receiving the opt-out signal, the sharing control component 124 can configure the computing device 102 to inhibit sharing of the shared portion of the network bandwidth capacity allocated to the account.

It is contemplated that the community Wi-Fi network 106, for example, can be implemented within an ecosystem. Following this example, the ecosystem can be for a certain type of consumer device, where the consumer devices are net metered. Based upon the net metering, a net producer (e.g., sharing more than consuming) can earn credit back towards a service contract, enhanced quality of service (QoS), etc.

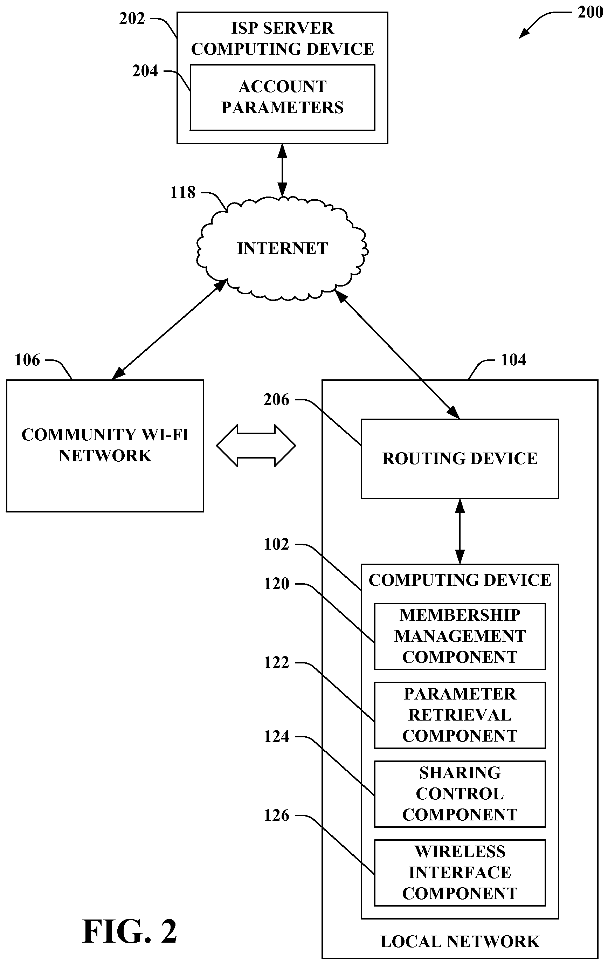

Turning to Fig. 2, illustrated is a system 200 that automatically configures the computing device 102 for joining the community Wi-Fi network 106 upon receipt of an opt-in signal indicating that the computing device 102 desirably be added to the community Wi-Fi network 106. The system 200 again includes the community Wi-Fi network 106 and the local network 104. The system 200 further includes an ISP server computing device 202, which can retain account parameters 204. For instance, the account parameters 204 can be retained in a data repository (not shown) of the ISP server computing device 202. The ISP server computing device 202 can be a server computing device of the ISP that provides the network bandwidth capacity allocated to the account of the local network 104.

The local network 104 includes the computing device 102. Examples of the computing device 102 include an access point, a computer, a gaming console, or the like; yet, other types of computing devices are intended to fall within the scope of the hereto appended claims. The local network 104 can further include a routing device 206 (e.g., a router). According to an example, the computing device 102 can be coupled with the routing device 206 (e.g., directly, via intermediary device(s)). The routing device 206 can forward data packets between networks (e.g., the local network 104 and a network of the ISP); thus, the routing device 206 can connect to the Internet 118 through the network of the ISP.

As noted above, the membership management component 120 of the computing device 102 can receive the opt-in signal indicating that the computing device 102 desirably be added to the community Wi-Fi network 106. Responsive to receiving the opt-in signal, the parameter retrieval component 122 can retrieve the account parameters 204 from the ISP server component device 202. More particularly, the parameter retrieval component 122 can receive credentials for the account (e.g., the credentials can be received based on user input). Further, the account parameters 204 can be retrieved by the parameter retrieval component 122 from the ISP server computing device 202 utilizing the credentials.

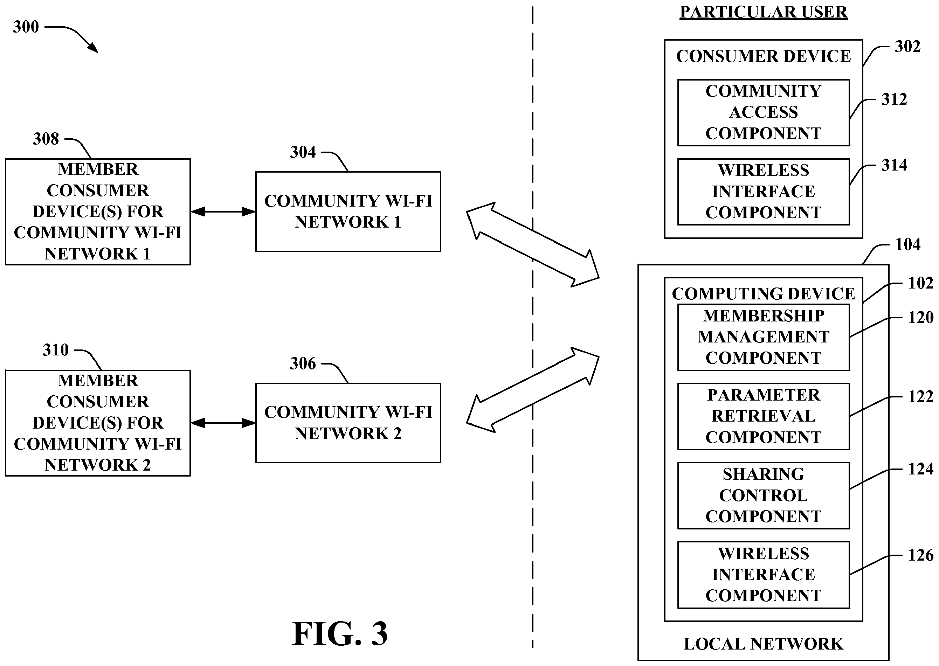

With reference to Fig. 3, illustrated is a system 300 that joins a computing device 102 and a consumer device 302 of a particular user to one or more community Wi-Fi networks. The particular user can be associated with the computing device 102 as well as the consumer device 302. The particular user can opt-in to a community Wi-Fi network 1 304 and/or a community Wi-Fi network to 2 306 (collectively referred to herein as community Wi-Fi networks 304-306).

The community Wi-Fi networks 304-306 can correspond to different groups, geographic locations, or the like. For instance, the community Wi-Fi network 1 304 can correspond to a first neighborhood in a city, while the community Wi-Fi network 2 306 can correspond to a second neighborhood in the city. According to another example, the community Wi-Fi network 1 304 can be implemented within a first group of users from a social network (e.g., a group based upon friends of friends), and the community Wi-Fi network 2 306 can be implemented within a second group of users from the social network (e.g., a differing group based upon friends of friends).

The consumer device 302 can include a community access component 312 that can cause the consumer device 302 to be added to the member consumer devices for a given community Wi-Fi network. The community access component 312 can cause the consumer device 302 to be added to the member consumer devices for the given community Wi-Fi network responsive to receipt of an opt-in signal (e.g., obtained from the particular user). Further, the consumer device 302 can include a wireless interface component 314 that can communicate with computing devices included in the given community Wi-Fi network via Wi-Fi connections upon being added to the member consumer devices for the given community Wi-Fi network.

By way of illustration, the particular user can choose to add the computing device 102 to the community Wi-Fi network 1 304. Accordingly, the computing device 102 can be configured to share the shared portion of the network bandwidth capacity of the local network 104 with one or more member consumer devices 308 for the community Wi-Fi network 1 304. Moreover, the particular user can choose to add the consumer device 302 to the member consumer devices 308 for the community Wi-Fi network 1 304. Additionally or alternatively, the particular user can opt-in to joining the computing device 102 and the consumer device 302 to the community Wi-Fi network 2 306; thus, the computing device 102 can be added to the community Wi-Fi network 2 306 and the consumer device 302 can be added to member consumer devices 310 for the community Wi-Fi network 2 306.

While two community Wi-Fi networks are described in the example set forth in Fig. 3, it is to be appreciated that substantially any number of community Wi-Fi networks can be employed. Accordingly, the claimed subject matter is not limited to use of two community Wi-Fi networks.

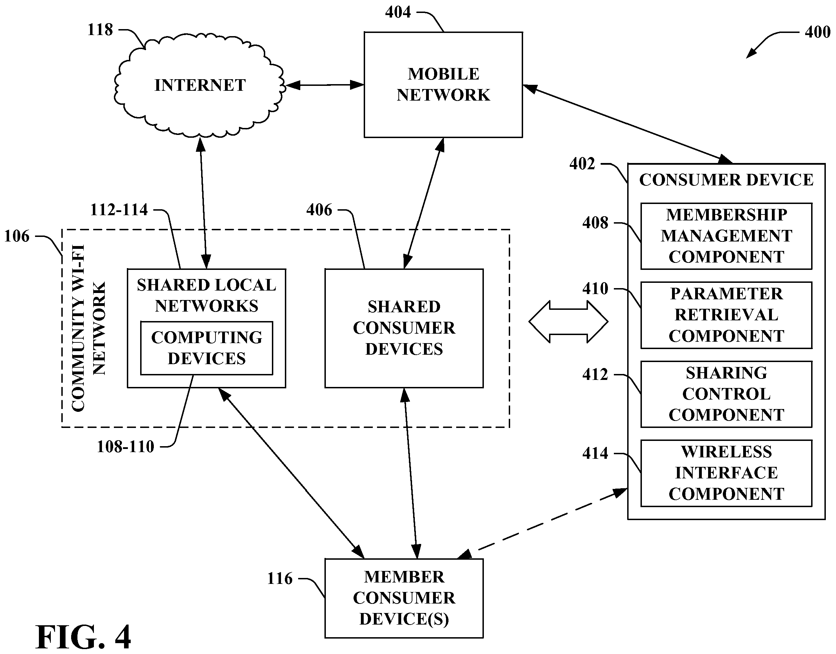

With reference to Fig. 4, illustrated is a system 400 that joins a consumer device 402 (e.g., a mobile device, etc.) to the community Wi-Fi network 106. When added to the community Wi-Fi network 106, the consumer device 402 can share an Internet connection via a mobile network 404 with the member consumer devices 116 upon being added to the community Wi-Fi network 106. Thus, the consumer device 402 can be opted into the community Wi-Fi network 106 for Internet connection sharing.

The community Wi-Fi network 106 can be a cross domain network. Hence, the community Wi-Fi network 106 can include the computing devices 108-110 of the shared local networks 112-114. Moreover, the community Wi-Fi network 106 can include one or more disparate shared consumer devices 406, which share respective Internet connections provided via the mobile network 404 (and/or disparate mobile networks (not shown).

The consumer device 402 can include a membership management component 408, a parameter retrieval component 410, a sharing control component 412, and a wireless interface component 414, which can be substantially similar to the membership management component 120, the parameter retrieval component 122, the sharing control component 124, and the wireless interface component 126. Moreover, the consumer device 402 can have a network bandwidth capacity usable thereby provided by the mobile network 404. Accordingly, similar to the computing device 102 described herein, the membership management component 408 of the consumer device 402 can receive the opt-in signal indicating that the consumer device 402 desirably be added to the community Wi-Fi network 106. Responsive to receiving the opt-in signal, the parameter retrieval component 410 can retrieve parameters of an account of the consumer device 402. Moreover, the sharing control component 412 can determine a shared portion of the network bandwidth capacity based at least in part upon the parameters of the account. The sharing control component 412 can further configure the consumer device 402 to share the shared portion of the network bandwidth capacity for consumption by the member consumer devices 116. Further, the wireless interface component 414 can communicate with the member consumer devices 116 over a Wi-Fi connection.

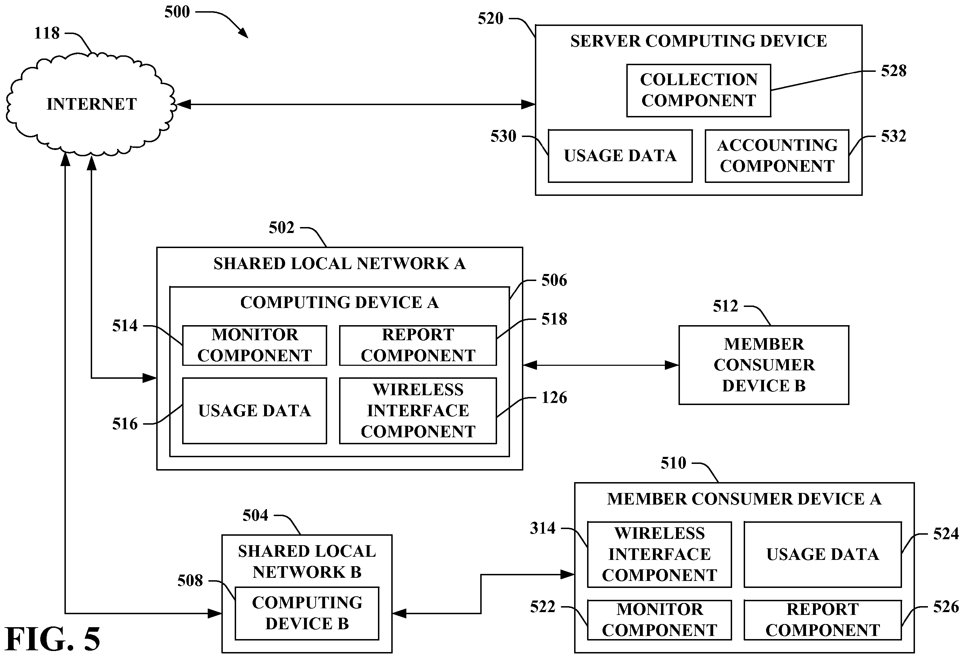

With reference to Fig. 5, illustrated is a system 500 that evaluates a resource provision and consumption model for a community Wi-Fi network. Bandwidth provided and consumed by a user in the community Wi-Fi network (e.g., the community Wi-Fi network 106) can be net metered. As shown in Fig. 5, the system 500 includes a shared local network A 502 and a shared local network B 504. The shared local network A 502 includes a computing device A 506, and the shared local network B 504 includes a computing device B 508. The computing device A 506 and the computing device B 508 (collectively referred to herein as computing devices 506-508) are included in the community Wi-Fi network. The computing devices 506-508 are configured to share respective network bandwidth capacities with one or more member consumer devices of the community Wi-Fi network. Moreover, although not shown, it is to be appreciated that substantially any number of disparate computing devices from substantially any number of disparate shared local networks can also be included in such community Wi-Fi network.

The system 500 further includes a member consumer device A 510 and a member consumer device B 512 (collectively referred to herein as member consumer devices 510-512). While not shown, it is to be appreciated that the system 500 can include substantially any number of disparate member consumer devices in addition to the member consumer devices 510-512.

The computing device A 506 and the member consumer device A 510 can both be used by a user A. Similarly, the computing device B 508 and the member consumer device B 512 can both be utilized by a user B. It is contemplated that the user A or the user B can further employ additional computing device(s) and/or member consumer device(s). Moreover, it is to be appreciated that users other than the user A or the user B can utilize other computing devices and/or other member consumer devices.

While not shown, it is contemplated that the computing device A 506 can include the membership management component 120, the parameter retrieval component 122, and the sharing control component 124 as described herein. The computing device A 506 further includes the wireless interface component 126, which communicates with one or more member consumer devices over a Wi-Fi connection. For instance, the wireless interface component 126 can communicate with the member consumer device B 512 over the Wi-Fi connection.

The computing device A 506 can further include a monitor component 514 that can track the consumption by the member consumer devices of the shared portion of the network bandwidth capacity provided by the computing device A 506. Accordingly, the monitor component 514 can track the consumption by the member consumer device B 512 as well as disparate member consumer device(s) that consume the shared portion of the network bandwidth capacity provided by the computing device A 506. According to an example, the monitor component 514 can retain usage data 516 in a data repository (not shown) of the computing device A 506, where the usage data 516 is indicative of tracked consumption by the member consumer devices. Moreover, the computing device A 506 can include a report component 518 that can transmit the usage data 516 indicative of the tracked consumption by the member consumer devices to at least one server computing device 520 via the Internet 118.

Moreover, the member consumer device A 510 can communicate with the computing device B 508 over a Wi-Fi connection (as well as other computing device(s) included in the community Wi-Fi network) using the wireless interface component 314. The member consumer device A 510 can further include a monitor component 522 that can track the consumption by the member consumer device A 510 of the shared portions of the network bandwidth capacities provided by the computing device B 508 as well as the other computing devices with which the member consumer device A 510 communicates. Again, the monitor component 522 can retain usage data 524 in a data repository (not shown) of the member consumer device A 510, where the usage data can be indicative of tracked consumption by member consumer device A 510. The member consumer device A 510 can also include a report component 526 that can transmit the usage data 524 indicative of the tracked consumption by the member consumer device A 510 to the server computing device 520.

The server computing device 520 can include a collection component 528 that receives usage data 530, which can be retained in a data repository (not shown) of the server computing device 520. According to an example, the usage data 530 can include the usage data 516 from the computing device A 506 and the usage data 524 from the member consumer device A 510. Following this example, the collection component 528 can receive the usage data 516 sent by the report component 518 of the computing device A 506 as well as usage data collected by disparate computing devices in the community Wi-Fi network. Moreover, the collection component 528 can obtain the usage data 524 from the member consumer device A 510 sent by the report component 526 as well as disparate usage data of disparate member consumer devices. According to another example, the collection component 528 can obtain the usage data 530 from one or more servers of one or more ISPs. By way of yet another example, the server computing device 520 can track consumption of shared network bandwidth capacities in the community Wi-Fi network, and retain the usage data 530 in the data repository.

The server computing device 520 can further include an accounting component 532. The accounting component 532 can assign credits and debits to profiles of users. The accounting component 532 can further compute net metered values for the profiles of the users as a function of respective differences between the credits and the debits.

Moreover, the accounting component 532 can employ differing rates when assigning the credits and debits. For instance, different types of network bandwidth capacity can have differing rates (e.g., network bandwidth capacity via a mobile network can be more expensive than network bandwidth capacity via a broadband ISP). Pursuant to another example, differing geographic locations can have differing rates (e.g., network bandwidth capacity near a stadium in a city can be more expensive than network bandwidth capacity near a rural town). In accordance with yet another example, different times of day can be associated with differing rates (e.g., network bandwidth capacity during a peak usage time period can be more expensive than network bandwidth capacity during an off-peak usage time period). By way of illustration, rates at which the credits and the debits are accrued can be dynamically adjusted over time based upon network bandwidth capacity demand. Thus, the cost of network bandwidth capacity can be altered over time (e.g., sharing an amount of network bandwidth capacity during a higher demand time period can result in more credits being accrued as compared to sharing that amount of network bandwidth capacity during a lower demand time period, consuming an amount of network bandwidth capacity during a higher demand time period can result in more debits being accrued as compared to consuming that amount of network bandwidth capacity during a lower demand time period).

Many of the following examples pertain to the user A; it is contemplated that such examples can be extended to other users that employ computing devices and member consumer devices in the system 500.

By way of example, the collection component 528 can receive usage data indicative of an amount of consumed network bandwidth capacity provided by the computing device A 506 in the community Wi-Fi network. Further, the collection component 528 can receive usage data indicative of an amount of consumed network bandwidth capacity consumed by the member consumer device A 510 of the user in the community Wi-Fi network. The accounting component 532 can assign credits to a profile of the user based upon the amount of the consumed network bandwidth capacity provided by the computing device A 506 in the community Wi-Fi network. Further, the accounting component 532 can assign debits to the profile of the user based upon the amount of the consumed network bandwidth capacity consumed by the member consumer device A 510 of the user in the community Wi-Fi network. The accounting component 532 can also compute a net metered value for the profile of the user as a function of a difference between the credits and the debits.

Accordingly, bandwidth provided and consumed by the user A of the computing device A 506 and the member consumer device A 510 can be net metered. Credits can be accrued as a function of an amount of the shared portion of the network bandwidth capacity provided by the computing device A 506 consumed by the member consumer devices (e.g., the member consumer device B 512, disparate member consumer devices, etc.). Moreover, debits can be accrued as a function of an amount of the network bandwidth capacities shared by the disparate computing devices (e.g., the computing device B 508, disparate computing devices included in the community Wi-Fi network, etc.) consumed by the member consumer device A 510 of the user.

Pursuant to an example, the accounting component 532 can assign credits to the profile of the user A upon initiation of the computing device A 506 sharing network bandwidth capacity for consumption by the member consumer devices of the community Wi-Fi network. Thus, the computing device A 506 can earn a credit upon initiating sharing of the shared portion of the network bandwidth capacity for consumption by the member consumer devices.

By way of another example, the accounting component 532 can assign credits to the profile of the user based upon a referral. For instance, a referral credit can be earned by the user A of the computing device A 506. The referral credit can be based upon a referred computing device of a referred user joining the community Wi-Fi network, an amount of consumed network bandwidth capacity shared by the referred computing device, an amount of the network bandwidth capacities shared by computing devices included in the community Wi-Fi network consumed by the referred consumer device of the referred user, or the like. For instance, if the user A refers the user B, then the user A can earn a referral credit based upon the user B joining the computing device B 508 to the community Wi-Fi network, an amount of consumed network bandwidth capacity shared by the computing device B 508, and/or an amount of the network bandwidth capacities shared by disparate computing devices included in the community Wi-Fi network (other than the computing device B 508) consumed by the member consumer device B 512 of the user B.

By way of another example, at least a part of the shared portion of the network bandwidth capacity provided by the computing device A 506 can be gifted to a given member consumer device of the community Wi-Fi network. For instance, a sharing control component (e.g., the sharing control component 124) of the computing device A 506 can gift at least a part of the shared portion of the network bandwidth capacity supplied by the computing device A 506 to the member consumer device B 512. When gifted to the member consumer device B 512, the accounting component 532 need not assign credits to a profile of the user A of the computing device A 506 upon consumption of such part of the shared portion of the network bandwidth capacity by the member consumer device B 512. Likewise, the accounting component 532 need not assign a debit associated with such consumption by the member consumer device 512 of the gifted part of the shared portion of the network bandwidth capacity provided by the computing device A 506.

The accounting component 532 can further assign credits to the profile of a user of a member consumer device (e.g., the consumer device 402 of Fig. 4, the shared consumer devices 406 of Fig. 4) based upon an amount of consumed network bandwidth capacity provided by the member consumer device of the user and consumed by other member consumer devices of the community Wi-Fi network. For instance, the member consumer device A 510 can opt-in to Internet connection sharing. Accordingly, credits can be earned based upon the consumed shared network bandwidth capacity supplied by member consumer device A 510 and consumed by disparate member consumer devices (e.g., the member consumer device B 512, disparate member consumer devices, etc.).

It is to be appreciated that credits and debits can be earned at differing rates based upon differing types of network bandwidth capacity consumed or provided. For instance, debits and credits can be earned at a greater rate for network bandwidth capacity provided by a member consumer device via Internet connection sharing as compared to network bandwidth capacity supplied by a computing device; yet, the claimed subject matter is not so limited.

While the accounting component 532 is illustrated in the example of Fig. 5 as being included in the server computing device 520, it is to be appreciated that a similar accounting component can be included in the computing device A 506 (as well as disparate computing devices in the community Wi-Fi network). Moreover, an accounting component similar to the accounting component 532 can be included in the member consumer device A 510 (as well as disparate member consumer devices). Accordingly, bookkeeping can be performed on a client (e.g., a member consumer device), a computing device, and/or a server computing device. For instance, a net metered value for the profile of a user can be displayed on a display screen of a computing device, member consumer device, and/or server computing device.

According to various examples, a net metered value for a profile of a user can result in credits towards service and/or equipment, enhanced QoS, and so forth. For instance, if the user is a net provider (e.g., the credits assigned to the profile of the user exceed the debits assigned the profile of the user), then the user may earn credits towards service or equipment; however, the claimed subject matter is not limited to the foregoing illustration.

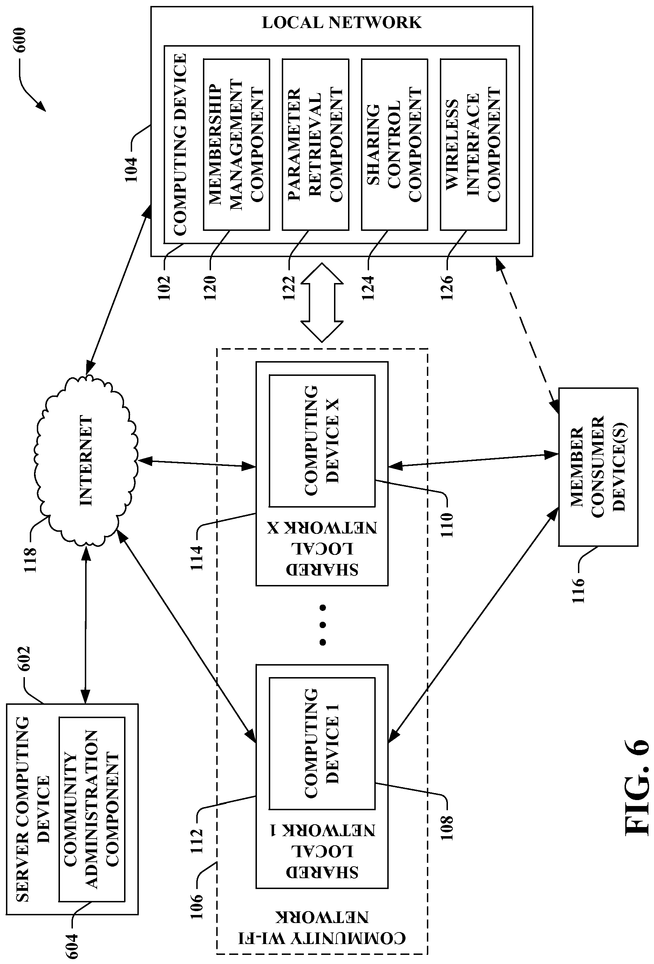

Now turning to Fig. 6, illustrated is a system 600 that controls admission to the community Wi-Fi network 106 from a server computing device 602. According to an example, the server computing device 602 can be the server computing device 520 of Fig. 5; yet, the claimed subject matter is not so limited. The server computing device 602 further includes a community administration component 604 that controls admission of computing devices and member consumer devices to the community Wi-Fi network 106.

The membership management component 120 of the computing device 102 can send a request to join the community Wi-Fi network 106, where the request is sent to the server computing device 602 responsive to receiving the opt-in signal indicating that the computing device 102 desirably be added to the community Wi-Fi network 106. The community administration component 604 can receive the request. Further, responsive to receipt of the request, the community administration component 604 can accept or deny such request (e.g., based upon an identifier pertaining to the computing device 102, an identifier of a user of the computing device 102, etc.). If the request is accepted by the community administration component 604, then the computing device 102 can continue to be joined to the community Wi-Fi network 106 as described herein. Alternatively, if the community administration component 604 denies the request from the computing device 102, then the computing device 102 can be inhibited from joining the community Wi-Fi network 106.

Similarly, a consumer device can send a request to be added to the member consumer devices 116 of the community Wi-Fi network 106 (e.g., sent by the community access component 312). Again, such request can be sent to the server computing device 602. Moreover, the community administration component 604 can accept or deny the request from the consumer device.

Additionally or alternatively, the community administration component 604 can manage a QoS for a member consumer device of a user in the community Wi-Fi network as a function of the net metered value for the user. By way of example, a profile of a first user can have a greater net metered value as compared to a profile of a second user (e.g., where the net metered value is credits minus debits). Following this example, the community administration component 604 can provide a member consumer device of the first user with enhanced QoS as compared to the QoS provided to a member consumer device of the second user.

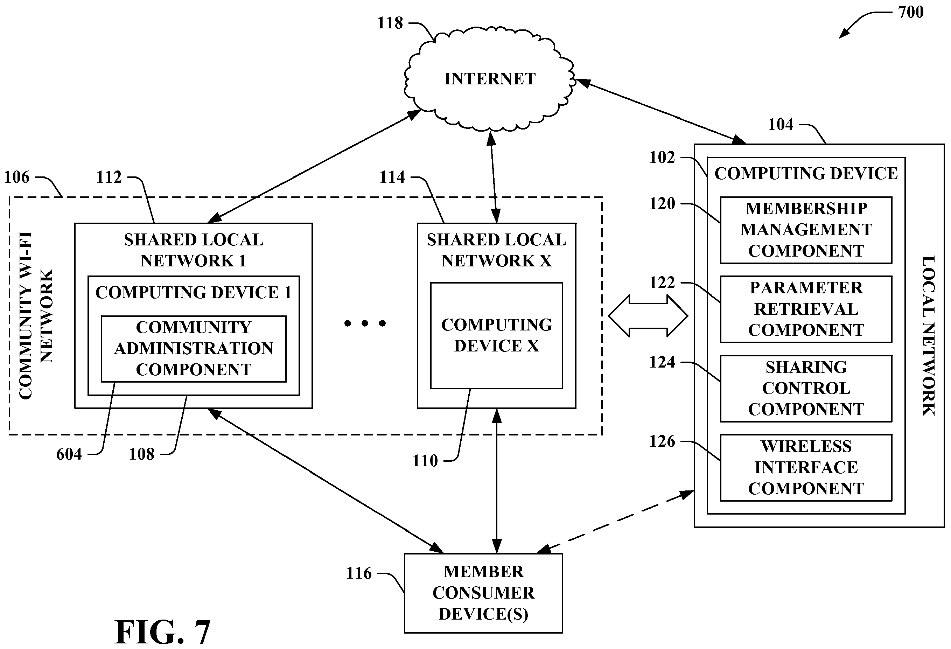

Now turning to Fig. 7, illustrated is another system 700 that controls admission to the community Wi-Fi network 106. In the example set forth in Fig. 7, the computing device 1 108 can include the community administration component 604 described herein. However, it is to be appreciated that other computing device 108-110 included in the community Wi-Fi network 106 can additionally or alternatively include the community administration component 604.

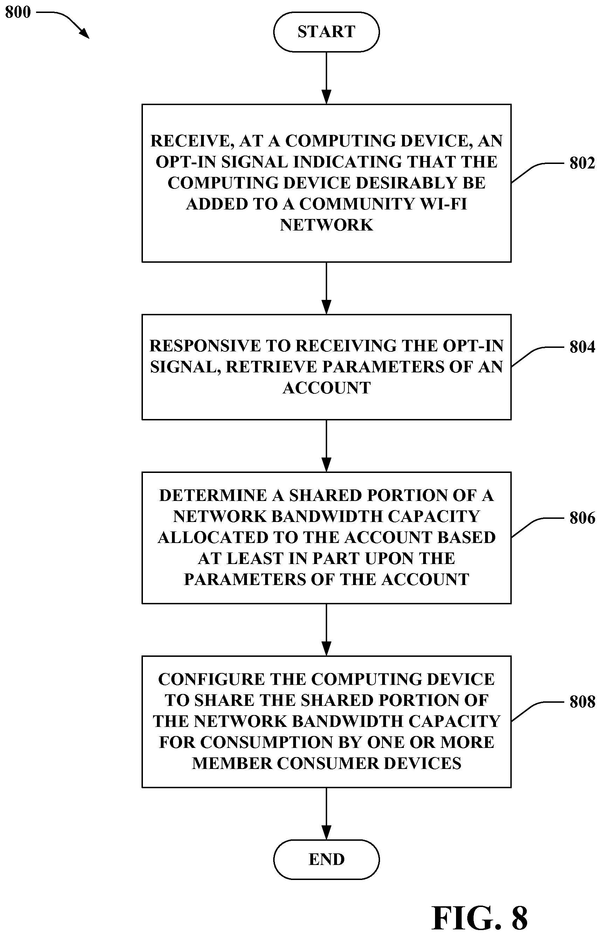

Figs. 8-9 illustrate exemplary methodologies relating to joining and utilizing a community Wi-Fi network. While the methodologies are shown and described as being a series of acts that are performed in a sequence, it is to be understood and appreciated that the methodologies are not limited by the order of the sequence. For example, some acts can occur in a different order than what is described herein. In addition, an act can occur concurrently with another act. Further, in some instances, not all acts may be required to implement a methodology described herein.

Moreover, the acts described herein may be computer-executable instructions that can be implemented by one or more processors and/or stored on a computer-readable medium or media. The computer-executable instructions can include a routine, a sub-routine, programs, a thread of execution, and/or the like. Still further, results of acts of the methodologies can be stored in a computer-readable medium, displayed on a display device, and/or the like.

Fig. 8 illustrates a methodology 800 of joining a computing device in a local network to a community Wi-Fi network. The community Wi-Fi network can include disparate computing devices. Moreover, the disparate computing devices can share respective network bandwidth capacities with one or more member consumer devices of the community Wi-Fi network. At 802, an opt-in signal indicating that the computing device desirably be added to the community Wi-Fi network can be received at the computing device. At 804, responsive to receiving the opt-in signal, parameters of an account can be retrieved. The parameters can include at least data indicating a network bandwidth capacity allocated to the account. Moreover, the network bandwidth capacity allocated to the account can be usable by the computing device. At 806, a shared portion of the network bandwidth capacity allocated to the account can be determined based at least in part upon the parameters of the account. At 808, the computing device can be configured to share the shared portion of the network bandwidth capacity for consumption by the one or more member consumer devices. Further, the computing device and the one or more member consumer devices can communicate over a Wi-Fi connection.

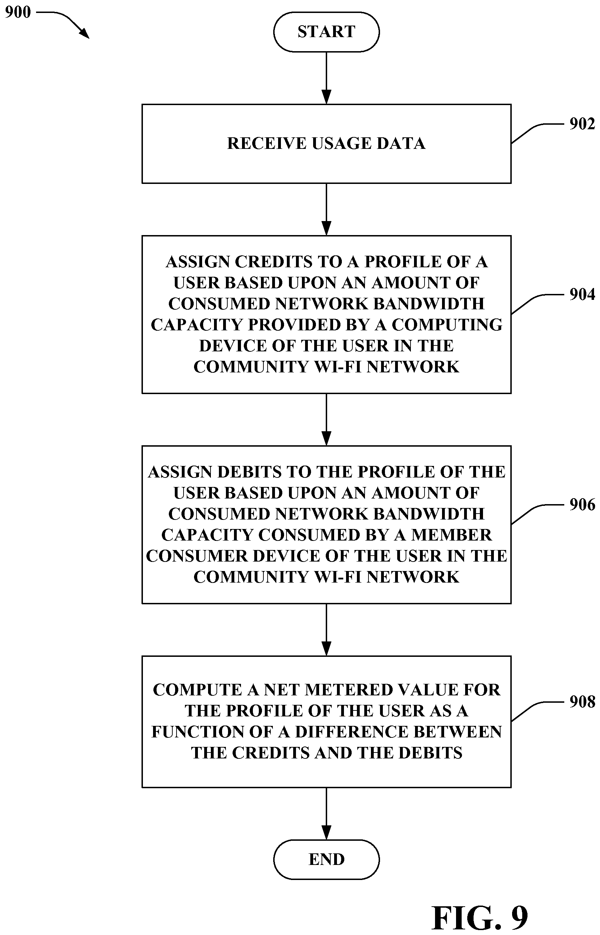

Turning to Fig. 9, illustrated is a methodology 900 of net metering bandwidth provided and consumed by a user in a community Wi-Fi network. At 902, usage data can be received. The usage data can be indicative of an amount of consumed network bandwidth capacity provided by a computing device of the user in the community Wi-Fi network. Moreover, the usage data can be indicative of an amount of consumed network bandwidth capacity consumed by a member consumer device of the user in the community Wi-Fi network. At 904, credits can be assigned to a profile of the user based upon the amount of consumed network bandwidth capacity provided by the computing device of the user in the community Wi-Fi network. At 906, debits can be assigned to the profile of the user based upon the amount of the consumed network bandwidth capacity consumed by the member consumer device of the user in the community Wi-Fi network. At 908, a net metered value for the profile of the user can be computed as a function of a difference between the credits and the debits.

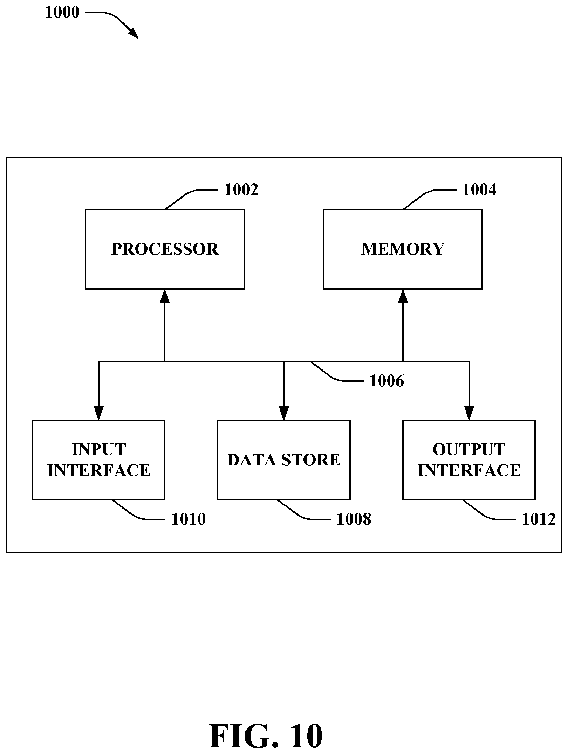

Referring now to Fig. 10, a high-level illustration of an exemplary computing device 1000 that can be used in accordance with the systems and methodologies disclosed herein is illustrated. For instance, the computing device 1000 may be the computing device 102, one of the computing devices 108-110, one of the member consumer devices 116, the ISP server computing device 202, the consumer device 302, the consumer device 402, one of the shared consumer devices 406, one of the computing devices 506-508, one of the member consumer devices 510-512, the server computing device 520, or the server computing device 602. The computing device 1000 includes at least one processor 1002 that executes instructions that are stored in a memory 1004. The instructions may be, for instance, instructions for implementing functionality described as being carried out by one or more components discussed above or instructions for implementing one or more of the methods described above. The processor 1002 may access the memory 1004 by way of a system bus 1006. In addition to storing executable instructions, the memory 1004 may also store account parameters, usage data, profiles of users, and so forth.

The computing device 1000 additionally includes a data store 1008 that is accessible by the processor 1002 by way of the system bus 1006. The data store 1008 may include executable instructions, account parameters, usage data, profiles of users, etc. The computing device 1000 also includes an input interface 1010 that allows external devices to communicate with the computing device 1000. For instance, the input interface 1010 may be used to receive instructions from an external computer device, from a user, etc. The computing device 1000 also includes an output interface 1012 that interfaces the computing device 1000 with one or more external devices. For example, the computing device 1000 may display text, images, etc. by way of the output interface 1012.

It is contemplated that the external devices that communicate with the computing device 1000 via the input interface 1010 and the output interface 1012 can be included in an environment that provides substantially any type of user interface with which a user can interact. Examples of user interface types include graphical user interfaces, natural user interfaces, and so forth. For instance, a graphical user interface may accept input from a user employing input device(s) such as a keyboard, mouse, remote control, or the like and provide output on an output device such as a display. Further, a natural user interface may enable a user to interact with the computing device 1000 in a manner free from constraints imposed by input device such as keyboards, mice, remote controls, and the like. Rather, a natural user interface can rely on speech recognition, touch and stylus recognition, gesture recognition both on screen and adjacent to the screen, air gestures, head and eye tracking, voice and speech, vision, touch, gestures, machine intelligence, and so forth.

Additionally, while illustrated as a single system, it is to be understood that the computing device 1000 may be a distributed system. Thus, for instance, several devices may be in communication by way of a network connection and may collectively perform tasks described as being performed by the computing device 1000.

As used herein, the terms "component" and "system" are intended to encompass computer-readable data storage that is configured with computer-executable instructions that cause certain functionality to be performed when executed by a processor. The computer-executable instructions may include a routine, a function, or the like. It is also to be understood that a component or system may be localized on a single device or distributed across several devices.

Further, as used herein, the term "exemplary" is intended to mean "serving as an illustration or example of something."

Various functions described herein can be implemented in hardware, software, or any combination thereof. If implemented in software, the functions can be stored on or transmitted over as one or more instructions or code on a computer-readable medium. Computer-readable media includes computer-readable storage media. A computer-readable storage media can be any available storage media that can be accessed by a computer. By way of example, and not limitation, such computer-readable storage media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and blu-ray disc (BD), where disks usually reproduce data magnetically and discs usually reproduce data optically with lasers. Further, a propagated signal is not included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communication medium. Combinations of the above should also be included within the scope of computer-readable media.

Alternatively, or in addition, the functionality described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), etc.

What has been described above includes examples of one or more embodiments. It is, of course, not possible to describe every conceivable modification and alteration of the above devices or methodologies for purposes of describing the aforementioned aspects, but one of ordinary skill in the art can recognize that many further modifications and permutations of various aspects are possible. Accordingly, the described aspects are intended to embrace all such alterations, modifications, and variations that fall within the scope of the appended claims. Furthermore, to the extent that the term "includes" is used in either the details description or the claims, such term is intended to be inclusive in a manner similar to the term "comprising" as "comprising" is interpreted when employed as a transitional word in a claim.

## Claims

1. A method (800) of joining a computing device (102) in a local network (104) to a community Wi-Fi network (106) separate from the local network (104), the method comprising:
receiving (802), at the computing device (102), an opt-in signal indicating that the computing device (102) desirably be added to the community Wi-Fi network (106), wherein the community Wi-Fi network (106) comprises disparate computing devices (108, 110), and wherein the disparate computing devices (108, 110) share respective network bandwidth capacities with one or more member consumer devices (116) of the community Wi-Fi network (106);
responsive (804) to receiving the opt-in signal, retrieving parameters of an account of the local network (104), wherein the parameters comprise at least data indicating a network bandwidth capacity allocated to the account, and wherein the network bandwidth capacity allocated to the account is usable by the computing device (102);
determining (806) a shared portion of the network bandwidth capacity allocated to the account based at least in part upon the parameters of the account; and
configuring (808) the computing device (102) to share the shared portion of the network bandwidth capacity for consumption by the one or more member consumer devices (116), wherein the computing device (102) and the one or more member consumer devices (116) communicate over a Wi-Fi connection.

2. The method (800) of claim 1, wherein the computing device (102) is coupled with a routing device (206) in the local network (104), and wherein the computing device (102) is at least one of an access point, a computer, or a gaming console included in the local network (104).

3. The method (800) of claim 1, further comprising dynamically adjusting the shared portion of the network bandwidth capacity for consumption by the one or more member consumer devices (116) as a function of time based at least in part upon the parameters of the account.

4. The method (800) of claim 1, wherein the parameters of the account further comprise one or more of data indicating historic network bandwidth consumption for the account, data indicating a bandwidth cap for the account, data indicating bandwidth throttling for the account, or data indicating a cost of the network bandwidth capacity for the account.

5. The method (800) of claim 1, wherein bandwidth provided and consumed by a user of the computing device (102) in the community Wi-Fi network (106) is net metered, wherein credits are accrued as a function of an amount of the shared portion of the network bandwidth capacity consumed by the one or more member consumer devices (116), and wherein debits are accrued as a function of an amount of the network bandwidth capacities shared by the disparate computing devices (112, 114) consumed by a consumer device of the user.

6. The method (800) of claim 1, further comprising controlling access permissions for the shared portion of the network bandwidth capacity for consumption by the one or more member consumer devices (116), wherein the access permissions:
permit a first subset of the one or more member consumer devices (116) to consume the shared portion of the network bandwidth capacity; and
inhibit a second subset of the one or more member consumer devices (116) from consuming the shared portion of the network bandwidth capacity.

7. The method (800) of claim 1, further comprising controlling content restrictions for the shared portion of the network bandwidth capacity for consumption by the one or more member consumer devices (116), wherein the content restrictions:
permit consumption of a first subset of content types by the one or more member consumer devices (116) using the shared portion of the network bandwidth capacity; and
inhibit consumption of a second subset of the content types by the one or more member consumer devices (116) using the shared portion of the network bandwidth capacity.

8. A server computing device (520, 602), comprising:
a collection component (528) that receives usage data indicative of:
an amount of consumed network bandwidth capacity provided by a computing device (506, 508) of a user in a community Wi-Fi network (106), wherein the community Wi-Fi network (106) comprises computing devices (506, 508) that share respective network bandwidth capacities with member consumer devices (510, 512) of the community Wi-Fi network (106), and wherein the computing devices (506, 508) and the member consumer devices (510, 512) communicate over Wi-Fi connections; and
an amount of consumed network bandwidth capacity consumed by a member consumer device (510, 512) of the user in the community Wi-Fi network; and
an accounting component (532) that:
assigns credits to a profile of the user based upon the amount of the consumed network bandwidth capacity provided by the computing device (506, 508) of the user in the community Wi-Fi network;
assigns debits to the profile of the user based upon the amount of the consumed network bandwidth capacity consumed by the member consumer device (510, 512) of the user in the community Wi-Fi network; and
computes a net metered value for the profile of the user as a function of a difference between the credits and the debits.

9. The server computing device (602) of claim 8, further comprising a community administration component (604) that manages a quality of service 'QoS' for the member consumer device (116) of the user in the community Wi-Fi network as a function of the net metered value for the user.

10. A computing device (102) in a local network (104), comprising:
a membership management component (120) that receives an opt-in signal indicating that the computing device (102) desirably be added to a community Wi-Fi network (106) separate from the local network (104), wherein the community Wi-Fi network (106) comprises disparate computing devices (108, 110), and wherein the disparate computing devices (108, 110) share respective network bandwidth capacities with one or more member consumer devices (116) of the community Wi-Fi network (106);
a parameter retrieval component (122) that:
receives credentials for an account of the local network (104); and
responsive to receipt of the opt-in signal, retrieves parameters of the account from a server computing device (602) of an Internet Service Provider'ISP' utilizing the credentials, wherein the ISP provides network bandwidth capacity allocated to the account, wherein the parameters comprise at least data indicating the network bandwidth capacity allocated to the account, and wherein the network bandwidth capacity allocated to the account is usable by the computing device (102);
a sharing control component (124) that:
determines a shared portion of the network bandwidth capacity allocated to the account based at least in part upon the parameters of the account; and
configures the computing device (102) to share the shared portion of the network bandwidth capacity for consumption by the one or more member consumer devices (116); and
a wireless interface component (126) that communicates with the one or more member consumer devices (116) over a Wi-Fi connection.

## Patentansprüche

1. Verfahren (800) zum Verbinden einer Rechenvorrichtung (102) in einem lokalen Netzwerk (104) mit einem Gemeinschafts-Wi-Fi-Netzwerk (106), das von dem lokalen Netzwerk (104) getrennt ist, das Verfahren umfassend:
Empfangen (802), an der Rechenvorrichtung (102), eines Opt-in-Signals, das anzeigt, das die Rechenvorrichtung (102) wünschenswerterweise zu dem Gemeinschafts-Wi-Fi-Netzwerk (106) hinzugefügt werden soll, wobei das Gemeinschafts-Wi-Fi-Netzwerk (106) unterschiedliche Rechenvorrichtungen (108, 110) umfasst, und wobei die unterschiedlichen Rechenvorrichtungen (108, 110) jeweilige Netzwerk-Bandbreiten-Kapazitäten mit ein oder mehreren Mitgliedsverbrauchervorrichtungen (116) des Gemeinschafts-Wi-Fi-Netzwerk (106) teilen;
als Reaktion (804) auf das Empfangen des Opt-in-Signals, Abrufen von Parametern eines Kontos des lokalen Netzwerks (104), wobei die Parameter zumindest Daten umfassen, die eine dem Konto zugeordnete Netzwerk-Bandbreiten-Kapazität anzeigen, und wobei die dem Konto zugeordnete Netzwerk-Bandbreiten-Kapazität von der Rechenvorrichtung (102) verwendbar ist;
Bestimmen (806) eines gemeinsamen Abschnitts der dem Konto zugeordneten Netzwerk-Bandbreiten-Kapazität basierend zumindest teilweise auf den Parametern des Kontos; und
Konfigurieren (808) der Rechenvorrichtung (102) zum Teilen des gemeinsamen Abschnitts der Netzwerk-Bandbreiten-Kapazität zum Verbrauch durch die eine oder mehreren Mitgliedsverbrauchervorrichtungen (116), wobei die Rechenvorrichtung (102) und die ein oder mehreren Mitgliedsverbrauchervorrichtungen (116) über eine Wi-Fi-Verbindung kommunizieren.

2. Verfahren (800) nach Anspruch 1, wobei die Rechenvorrichtung (102) mit einer Routing-Vorrichtung (206) in dem lokalen Netzwerk (104) gekoppelt ist, und wobei die Rechenvorrichtung (102) zumindest eines ist von einem Zugangspunkt, einem Computer, oder einer Spielkonsole, enthalten in dem lokalen Netzwerk (104).

3. Verfahren (800) nach Anspruch 1, weiterhin umfassend dynamisches Einstellen des gemeinsamen Abschnitts der zugeordneten Netzwerk-Bandbreiten-Kapazität für den Verbrauch durch die eine oder mehreren Mitgliedsverbrauchervorrichtungen (116) als eine Funktion der Zeit, basierend zumindest teilweise auf den Parametern des Kontos.

4. Verfahren (800) nach Anspruch 1, wobei die Parameter des Kontos weiterhin eines oder mehrere von Daten, die historischen Netzwerk-Bandbreiten-Verbrauch für das Konto anzeigen, Daten, die eine Bandbreitenobergrenze für das Konnte anzeigen, Daten, die Bandbreitendrosselung für das Konto anzeigen, oder Daten, die Kosten der Netzwerk-Bandbreiten-Kapazität für das Konto anzeigen, umfassen.

5. Verfahren (800) nach Anspruch 1, wobei Bandbreite, bereitgestellt und verbraucht von einem Benutzer der Rechenvorrichtung (102) in dem Gemeinschafts-Wi-Fi-Netzwerk (106) netzdosiert ist, wobei Guthaben aufläuft, als eine Funktion eines Betrags des gemeinsamen Abschnitts der Netzwerk-Bandbreiten-Kapazität, der von einer oder mehreren Mitgliedsverbrauchervorrichtungen (116) verbraucht wird, und wobei Abbuchungen anfallen, als eine Funktion eines Betrags der Netzwerk-Bandbreiten-Kapazitäten, die von den unterschiedlichen Rechenvorrichtungen (112, 114) geteilt werden, der von einer Verbrauchervorrichtung des Benutzers verbraucht wird.

6. Verfahren (800) nach Anspruch 1, weiterhin umfassend
Steuern von Zugangsgenehmigungen für den gemeinsamen Abschnitt der Netzwerk-Bandbreiten-Kapazität zum Verbrauch durch die eine oder mehreren Mitgliedsverbrauchervorrichtungen (116), wobei die Zugangsgenehmigungen:
einer ersten Untergruppe der ein oder mehreren Mitgliedsverbrauchervorrichtungen (116) erlauben, den gemeinsamen Abschnitt der Netzwerk-Bandbreiten-Kapazität zu verbrauchen; und
eine zweite Untergruppe der ein oder mehreren Mitgliedsverbrauchervorrichtungen (116) am Verbrauch des gemeinsamen Abschnitts der Netzwerk-Bandbreiten-Kapazität hindern.

7. Verfahren (800) nach Anspruch 1, weiterhin umfassend
Steuern von Inhaltsbeschränkungen für den gemeinsamen Abschnitt der Netzwerk-Bandbreiten-Kapazität zum Verbrauch durch die eine oder mehreren Mitgliedsverbrauchervorrichtungen (116), wobei die Inhaltsbeschränkungen:
Verbrauch einer ersten Untergruppe von Inhaltstypen durch die eine oder mehreren Mitgliedsverbrauchervorrichtungen (116), die den gemeinsamen Abschnitt der Netzwerk-Bandbreiten-Kapazität verwenden, erlauben; und
Verbrauch einer zweiten Untergruppe von Inhaltstypen durch die eine oder mehreren Mitgliedsverbrauchervorrichtungen (116), die den gemeinsamen Abschnitt der Netzwerk-Bandbreiten-Kapazität verwenden, verhindern.

8. Server-Rechenvorrichtung (520, 602), umfassend:
eine Datenerhebungskomponente (528), die Verbrauchsdaten empfängt, die anzeigen:
einen Betrag von verbrauchter Netzwerk-Bandbreiten-Kapazität, bereitgestellt durch eine Rechenvorrichtung (506, 508) eines Benutzers in einem Gemeinschafts-Wi-Fi-Netzwerk (106), wobei das Gemeinschafts-Wi-Fi-Netzwerk (106) Rechenvorrichtungen (506, 508) umfasst, die jeweilige Netzwerk-Bandbreiten-Kapazitäten mit Mitgliedsverbrauchervorrichtungen (510, 512) des Gemeinschafts-Wi-Fi-Netzwerk (106) teilen, und wobei die Rechenvorrichtungen (506, 508) und die Mitgliedsverbrauchervorrichtungen (510, 512) über Wi-Fi-Verbindungen kommunizieren; und
einen Betrag an verbrauchter Netzwerk-Bandbreiten-Kapazität, verbraucht von einer Mitgliedsverbrauchervorrichtung (510, 512) des Benutzers in dem Gemeinschafts-Wi-Fi-Netzwerk;
und
eine Buchführungskomponente (532), die:
Guthaben einem Profil eines Benutzers zuweist, basierend auf dem Betrag der verbrauchten Netzwerk-Bandbreiten-Kapazität, die von der Rechenvorrichtung (506, 508) des Benutzers in dem Gemeinschafts-Wi-Fi-Netzwerk bereitgestellt wird;
Abbuchungen einem Profil eines Benutzers zuweist, basierend auf dem Betrag der verbrauchten Netzwerk-Bandbreiten-Kapazität, die von der Mitgliedsverbrauchervorrichtung (510, 512) des Benutzers in dem Gemeinschafts-Wi-Fi-Netzwerk verbraucht wird; und
einen netzdosierten Wert für das Profil des Benutzers als eine Funktion einer Differenz zwischen den Guthaben und den Abbuchungen berechnet.

9. Server-Rechenvorrichtung (602) nach Anspruch 8, weiterhin umfassend
eine Gemeinschafts-Verwaltungskomponente (604), die eine Qualität des Service 'QoS' für die Mitgliedsverbrauchervorrichtung (116) des Benutzers in dem Gemeinschafts-Wi-Fi-Netzwerk als eine Funktion des netzdosierten Wertes für den Benutzer verwaltet.

10. Rechenvorrichtung (102) in einem lokalen Netzwerk (104), umfassend:
eine Mitgliedschaft-Verwaltungskomponente (120), die ein Opt-in-Signal empfängt, das anzeigt, das die Rechenvorrichtung (102) wünschenswerterweise zu dem Gemeinschafts-Wi-Fi-Netzwerk (106) getrennt von dem lokalen Netzwerk (104) hinzugefügt werden soll, wobei das Gemeinschafts-Wi-Fi-Netzwerk (106) unterschiedliche Rechenvorrichtungen (108, 110) umfasst, und wobei die unterschiedlichen Rechenvorrichtungen (108, 110) jeweilige Netzwerk-Bandbreiten-Kapazitäten mit ein oder mehreren Mitgliedsverbrauchervorrichtungen (116) des Gemeinschafts-Wi-Fi-Netzwerk (106) teilen;
eine Parameterabrufkomponente (122), die:
Referenzen für ein Konto des lokalen Netzwerks (104) empfängt; und
als Reaktion auf das Empfangen des Opt-in-Signals, Parameter des Kontos von einer Server-Rechenvorrichtung (602) eines Internet Service Provider 'ISP' unter Verwendung der Referenzen abruft, wobei der ISP Netzwerk-Bandbreiten-Kapazität, zugeordnet zu dem Konto, bereitstellt, wobei die Parameter zumindest Daten umfassen, die eine dem Konto zugeordnete Netzwerk-Bandbreiten-Kapazität anzeigen, und wobei die dem Konto zugeordnete Netzwerk-Bandbreiten-Kapazität von der Rechenvorrichtung (102) verwendbar ist;
eine Steuerkomponente (124) für die gemeinsame Nutzung, die:
einen gemeinsamen Abschnitt der dem Konto zugeordneten Netzwerk-Bandbreiten-Kapazität, zumindest teilweise auf den Parametern des Kontos basierend, bestimmt; und
die Rechenvorrichtung (102) zum Teilen des gemeinsamen Abschnitts der Netzwerk-Bandbreiten-Kapazität zum Verbrauch durch die eine oder mehreren Mitgliedsverbrauchervorrichtungen (116) konfiguriert; und
eine drahtlose Schnittstellenkomponente (126), die mit der einen oder den mehreren Mitgliedsverbrauchervorrichtungen (116) über eine Wi-Fi-Verbindung kommuniziert.

## Revendications

1. Procédé (800) pour associer un dispositif informatique (102) dans un réseau local (104) à un réseau Wi-Fi communautaire (106) séparé du réseau local (104), le procédé comprenant :
la réception (802), au niveau du dispositif informatique (102), d'un signal de consentement préalable indiquant que le dispositif informatique (102) désirerait être ajouté au réseau Wi-Fi communautaire (106), dans lequel le réseau Wi-Fi communautaire (106) comprend des dispositifs informatiques différents (108, 110), et dans lequel les dispositifs informatiques différents (108, 110) partagent des capacités de bande passante de réseau respectives avec un ou plusieurs dispositifs consommateurs membres (116) du réseau Wi-Fi communautaire (106) ;
en réponse (804) à la réception du signal de consentement préalable, la récupération de paramètres d'un compte du réseau local (104), dans lequel les paramètres comprennent au moins des données indiquant une capacité de bande passante de réseau attribuée au compte, et dans lequel la capacité de bande passante de réseau attribuée au compte est utilisable par le dispositif informatique (102) ;
la détermination (806) d'une portion partagée de la capacité de bande passante de réseau attribuée au compte sur la base au moins en partie des paramètres du compte ; et
la configuration (808) du dispositif informatique (102) pour partager la portion partagée de la capacité de bande passante de réseau pour la consommation par les un ou plusieurs dispositifs consommateurs membres (116), dans lequel le dispositif informatique (102) et les un ou plusieurs dispositifs consommateurs membres (116) communiquent sur une connexion Wi-Fi.

2. Procédé (800) selon la revendication 1, dans lequel le dispositif informatique (102) est couplé à un dispositif de routage (206) dans le réseau local (104) et dans lequel le dispositif informatique (102) est au moins un parmi un point d'accès, un ordinateur ou une console de jeux compris dans le réseau local (104).

3. Procédé (800) selon la revendication 1, comprenant en outre le réglage dynamique de la portion partagée de la capacité de bande passante de réseau pour la consommation par les un ou plusieurs dispositifs consommateurs membres (116) en fonction du temps sur la base au moins en partie des paramètres du compte.

4. Procédé (800) selon la revendication 1, dans lequel les paramètres du compte comprennent en outre une ou plusieurs parmi des données indiquant une consommation de bande passante de réseau historique pour le compte, des données indiquant un plafond de bande passante pour le compte, des données indiquant une limitation de bande passante pour le compte ou des données indiquant un coût de la capacité de bande passante de réseau pour le compte.

5. Procédé (800) selon la revendication 1, dans lequel une bande passante fournie et consommée par un utilisateur du dispositif informatique (102) dans le réseau Wi-Fi communautaire (106) est mesurée nette, dans lequel des crédits sont accumulés en fonction d'une quantité de la portion partagée de la capacité de bande passante de réseau consommée par les un ou plusieurs dispositifs consommateurs membres (116), et dans lequel des débits sont accumulés en fonction d'une quantité des capacités de bande passante de réseau partagées par les dispositifs informatiques différents (112, 114) consommées par un dispositif consommateur de l'utilisateur.

6. Procédé (800) selon la revendication 1, comprenant en outre le contrôle de permissions d'accès pour la portion partagée de la capacité de bande passante de réseau pour la consommation par les un ou plusieurs dispositifs consommateurs membres (116), dans lequel les permissions d'accès :
permettent à un premier sous-ensemble des un ou plusieurs dispositifs consommateurs membres (116) de consommer la portion partagée de la capacité de bande passante de réseau ; et
interdisent à un deuxième sous-ensemble des un ou plusieurs dispositifs consommateurs membres (116) de consommer la portion partagée de la capacité de bande passante de réseau.

7. Procédé (800) selon la revendication 1, comprenant en outre le contrôle de restrictions de contenu pour la portion partagée de la capacité de bande passante de réseau pour la consommation par les un ou plusieurs dispositifs consommateurs membres (116), dans lequel les restrictions de contenu :
permettent la consommation d'un premier sous-ensemble de types de contenu par les un ou plusieurs dispositifs consommateurs membres (116) utilisant la portion partagée de la capacité de bande passante de réseau ; et
interdisent la consommation d'un deuxième sous-ensemble de types de contenu par les un ou plusieurs dispositifs consommateurs membres (116) utilisant la portion partagée de la capacité de bande passante de réseau.

8. Dispositif informatique serveur (520, 602) comprenant :
un composant de collecte (528) qui reçoit des données d'utilisation indicatives :
d'une quantité de capacité de bande passante de réseau consommée fournie par un dispositif informatique (506, 508) d'un utilisateur dans un réseau Wi-Fi communautaire (106), dans lequel le réseau Wi-Fi communautaire (106) comprend des dispositifs informatiques (506, 508) qui partagent des capacités de bande passante de réseau respectives avec des dispositifs consommateurs membres (510, 512) du réseau Wi-Fi communautaire (106), et dans lequel les dispositifs informatiques (506, 508) et les dispositifs consommateurs membres (510, 512) communiquent sur des connexions Wi-Fi ; et
d'une quantité de capacité de bande passante de réseau consommée consommée par un dispositif consommateur membre (510, 512) de l'utilisateur dans le réseau Wi-Fi communautaire ; et
un composant de comptabilité (532) qui :
attribue des crédits à un profil de l'utilisateur sur la base de la quantité de capacité de bande passante de réseau consommée fournie par le dispositif informatique (506, 508) de l'utilisateur dans le réseau Wi-Fi communautaire ;
attribue des débits au profil de l'utilisateur sur la base de la quantité de la capacité de bande passante de réseau consommée consommée par le dispositif consommateur membre (510, 512) de l'utilisateur dans le réseau Wi-Fi communautaire ; et
calcule une valeur mesurée nette pour le profil de l'utilisateur en fonction d'une différence entre les crédits et les débits.

9. Dispositif informatique serveur (602) selon la revendication 8, comprenant en outre un composant d'administration communautaire (604) qui gère une qualité de service « QoS » pour le dispositif consommateur membre (116) de l'utilisateur dans le réseau Wi-Fi communautaire en fonction de la valeur mesurée nette pour l'utilisateur.

10. Dispositif informatique (102) dans un réseau local (104), comprenant :
un composant de gestion des membres (120) qui reçoit un signal de consentement préalable indiquant que le dispositif informatique (102) désirerait être ajouté au réseau Wi-Fi communautaire (106) séparé du réseau local (104), dans lequel le réseau Wi-Fi communautaire (106) comprend des dispositifs informatiques différents (108, 110), et dans lequel les dispositifs informatiques différents (108, 110) partagent des capacités de bande passante de réseau respectives avec un ou plusieurs dispositifs consommateurs membres (116) du réseau Wi-Fi communautaire (106) ;
un composant de récupération de paramètres (122) qui :
reçoit des identifiants pour un compte du réseau local (104) ; et
en réponse à la réception du signal de consentement préalable, récupère des paramètres du compte à partir d'un dispositif informatique serveur (602) d'un fournisseur de services Internet « ISP » en utilisant les identifiants, dans lequel l'ISP fournit une capacité de bande passante de réseau attribuée au compte, dans lequel les paramètres comprennent au moins des données indiquant la capacité de bande passante de réseau attribuée au compte, et dans lequel la capacité de bande passante de réseau attribuée au compte est utilisable par le dispositif informatique (102) ;
un composant de commande de partage (124) qui :
détermine une portion partagée de la capacité de bande passante de réseau attribuée au compte sur la base au moins en partie des paramètres du compte ; et
configure le dispositif informatique (102) pour partager la portion partagée de la capacité de bande passante de réseau pour la consommation par les un ou plusieurs dispositifs consommateurs membres (116) ; et
un composant d'interface sans fil (126) qui communique avec les un ou plusieurs dispositifs consommateurs membres (116) sur une connexion Wi-Fi.
